# FASCICULE DE BREVET EUROPEEN

(11) **EP 1 904 946 B1**
(45) Date de publication et mention de la délivrance du brevet: **21.01.2009**
(21) Numéro de dépôt: 06777304.4
(22) Date de dépôt: 12.06.2006
(51) Int. Cl.: G06F 21/06

(54) **DETECTION D'UNE FAUTE PAR PERTURBATION LONGUE**
ENTDECKUNG EINES FEHLERS DURCH EINE LANGE STÖRUNG
DETECTION OF FAULTS DURING A LONG PERTURBATION

(30) Priorité: 19.07.2005 FR 0552239
(43) Date de publication de la demande: 02.04.2008
(73) Titulaire: Gemalto SA, 92190 Meudon (FR)
(72) Inventeur: BENOIT, Olivier, F-13470 Carnoux-en-Provence (FR)
(86) Numéro de dépôt international: PCT/EP2006/063091
(87) Numéro de publication internationale: WO 2007/009847

(56) Documents cités:
- US-A- 5 802 266
- HAGAI BAR-EL ET AL: "The Sorcerer's Apprentice Guide to Fault Attacks" WORKSHOP ON FAULT DETECTION AND TOLERANCE IN CRYPTOGRAPHY, 7 mai 2004 (2004-05-07), XP002329915
- ANGHEL L ET AL: "Cost Reduction and Evaluation of a Temporary Faults Detecting Technique" IEEE, 27 mars 2000 (2000-03-27), pages 591-598, XP010377522

## Description

La présente invention se rapporte au domaine de la détection de fautes dans un composant électronique.

La présente invention concerne plus particulièrement un procédé permettant la détection de fautes issues d'une perturbation longue.

La carte à puce, et de manière plus générale, certains composants électroniques portables, sont bien souvent utilisés comme unité de calcul et de stockage de données secrètes et/ou sensibles dans le but de sécuriser une application. L'identité, la téléphonie mobile, le payement, le transport ou encore le contrôle d'accès sont autant de domaines d'application dans lesquels la carte à puce joue un rôle essentiel.

Ce rôle consiste, entre autres et de manière non limitative, à une authentification du porteur de la carte et/ou de l'émetteur de la carte. La carte peut également contenir des « unités » qui peuvent correspondre à des points de fidélité, de l'argent (par exemple les unités téléphoniques) ou encore des tickets de métro selon l'application.

La carte représente ainsi, pour certains individus et organisations malveillants, une cible de prédilection afin de frauder ou de porter atteinte à l'image de marque d'une société.

La carte fait face depuis son déploiement à des menaces dont l'observation de la consommation de courant (*side channel analysis*) mais également depuis peu aux attaques par injection de fautes transitoires. La détection de telles attaques est relativement complexe et la réponse à ces attaques difficile à mettre en oeuvre. Les composants électroniques actuels ne sont pas capables de garantir un fonctionnement correct quelles que soient les perturbations externes. Il en résulte que le logiciel ou système d'exploitation embarqué dans la carte doit se prémunir par lui-même de défaillances éventuelles du composant engendrées par une injection de faute sous peine de corruption de données sensibles.

L'art antérieur connaît déjà des solutions pour la détection de perturbations, par exemple des *glitchs* (impulsion de tension) qui seraient susceptibles d'entraîner une faute dans le fonctionnement du composant électronique. Notons l'existence de solutions matérielles qui consistent en intégrer des capteurs environnementaux (de température, de fréquence horloge, de tension d'alimentation, de lumière) qui vont détecter une perturbation (une tension anormalement basse, une intensité lumineuse trop forte) afin de réagir avant de rentrer dans une zone de fonctionnement du composant jugée instable et donc à risques en terme de faute. Ces solutions sont coûteuses car nécessitent le développement de capteurs spécifiques (coût économique) et l'intégration de ceux-ci dans des circuits parfois de petite taille (coût de taille).

On connaît également des solutions qui détectent l'effet de la perturbation subie, par exemple par la présence d'un bit de données modifié.

On distingue, entre autres, des solutions logicielles ou matérielles de type redondance d'un processus. La redondance consiste de manière simpliste à effectuer deux fois la même opération (calcul, transmission, ...) afin de comparer le résultat des deux actions. En mode logiciel, la redondance peut être un double calcul sur des données. En mode matériel, cette redondance peut se manifester pas la présence, par exemple, de deux registres dédoublés stockant a priori les mêmes valeurs. Si les résultats sont différents, alors il peut être raisonnablement conclu que l'une des actions s'est mal passée sûrement suite à une perturbation (faute).

Egalement, il existe des solutions logicielles ou matérielles de type contrôle d'intégrité. Une donnée stockée en mémoire non volatile se voit ajouté un « checksum » (somme de contrôle) de la donnée, cette somme permettant de détecter si la donnée est corrompue par une faute avant la vérification du checksum en cas d'incohérence entre la donnée et la somme checksum. L'ajout de données d'intégrité est répandu dans les couches logicielles, par exemple pour la transmission de données. Le *checksum* en *hardware* (matériel) tel qu'on le trouve dans l'art antérieur est mis en oeuvre uniquement au niveau d'un bloc mémoire, il prend bien souvent le nom de « bit de parité ». Le mot machine élémentaire (8 bits sur un composant 8-bit) est stocké sur 9 bits en mémoire, le 9^{ième} bit étant un bit de parité positionné de sorte que la parité du mot soit systématiquement pair/impair. Lors d'une lecture, la parité est vérifiée et le mot de 8 bits est positionné sur le bus de données. Lors d'une écriture, le mot de 8 bits positionné sur le bus de données est écrit en mémoire et le bit de parité est généré dans le même temps. Le problème est que sur le bus de données, le mot transmit ne comprend pas de données d'intégrité : il n'y a aucun moyen de vérifier que cette valeur, une fois transférée vers la mémoire, l'unité centrale de traitement CPU ou le cache, est encore correcte.

Ces solutions sont suffisantes pour des fautes « accidentelles » qui surviennent pendant l'exécution d'une commande, par exemple dans le domaine spatial, les fautes étant ponctuelles (impulsions) et affectant soit la donnée (ou processus sensible) soit sa redondance ou son *checksum.* Notons que tout processus décisionnel ou de manipulation de donnée sensible ou de calcul cryptographique peut être considéré comme sensible. A titre d'exemple, et ce de manière non limitatif, on citera, le processus décisionnel de choix d'acceptation d'une commande ou encore de choix d'acceptation une opération de lecture/écriture/effacement d'un fichier ou encore le choix d'acceptation d'un débit ou d'un crédit sur une balance électronique ou encore de comparaison d'un code secret ou d'un MAC *(Message Authentication Code).*

Cependant, des personnes mal intentionnées peuvent répéter des fautes sur les composants électroniques et adapter leurs techniques jusqu'au succès. Ainsi il est envisageable que le pirate tente de reproduire la même faute à la fois sur le processus sensible et sur le processus redondant afin que la faute ne soit pas détectée.

L'art antérieur connaît alors une solution consistant à insérer, comme illustré par la figure 1, un délai aléatoire (12) entre un processus sensible (10) et sa redondance (11). Cette solution accroît de façon importante la résistance de la protection contre les fautes.

Le document "The Sorcerer's Apprentice Guide to Fault Attacks" de HAGAI BAR-EL ET AL présenté durant le "WORKSHOP ON FAULT DETECTION AND TOLERANCE IN CRYPTOGRAPHY" le 7 mai 2004 décrit diverses contremesures contre des attaques de type injection de fautes par perturbations, dont l'insertion d'un délai entre un processus sensible à exécuter et un processus redondant (Simple Time Redundancy with Comparison).

Le document "Cost Reduction and Evaluation of a Temporary Faults Detecting Technique" présenté durant la conférence IEEE le mars 2000 décrit également pages 591-598 la technique précédente qui consiste à insérer un délai entre un processus sensible à exécuter et un processus redondant.

Cependant des perturbations physiques longues (13) peuvent être mises en oeuvre par des pirates sur les composants de telle sorte que les processus sensibles et

leur redondance soient tous perturbés et ne puissent pas permettre de détecter une quelconque faute.

De façon générale, les solutions de l'art antérieur ne permettent pas de faire face de façon efficace à des perturbations longues pouvant affecter à la fois les processus sensibles et les données de redondance.

La présente invention entend remédier aux inconvénients de l'art antérieur en proposant un procédé de détection de fautes dans lequel des moyens de type piège sont introduits pendant le délai séparant le processus sensible de sa redondance. Notamment, le piège est sensible aux mêmes perturbations afin de fournir des indications de la présence de celles-ci.

Le procédé selon la présente invention répond particulièrement bien à la protection contre les perturbations longues puisque le piège remonte l'information de perturbations si ces dernières englobe à la fois le processus sensible et le processus redondant.

A cet effet, l'invention concerne dans son acception la plus générale un procédé de détection d'une faute par perturbations pendant l'exécution d'un code informatique dans un dispositif électronique, ledit code informatique comportant un processus dit sensible, le procédé comprenant une étape d'exécution d'un processus redondant dudit processus sensible et une étape d'insertion d'un délai entre le processus sensible et le processus redondant, caractérisé en ce qu'il comporte, en outre, une étape d'exécution d'un moyen de type piège pendant ledit délai, ledit moyen étant sensible auxdites perturbations et fournissant, en l'absence de perturbation, un résultat prédictible.

Selon le mode de réalisation, ledit moyen de type piège est un capteur logiciel ou un capteur matériel.

Dans un mode de réalisation, ledit délai inséré est déterminé de façon aléatoire.

Dans un autre mode de réalisation, ledit moyen de type piège est exécuté après un temps d'attente aléatoire.

Particulièrement, ladite étape d'exécution du moyen de type piège consiste à exécuter un nombre aléatoire de fois ledit moyen de type piège.

Dans un mode de réalisation, le résultat prédictible est une valeur de référence dans la mémoire du dispositif.

Dans un mode de réalisation particulier, ledit moyen de type piège consiste en des lectures et écritures d'au moins une valeur de référence dans les mémoires du dispositif.

Dans une variante, ledit moyen de type piège réalise des opérations sur au moins une valeur de référence.

Dans un mode de réalisation, ledit processus sensible consiste en une manipulation (lecture écriture, calcul, branchement conditionnel) d'une donnée sensible ou secrète.

Eventuellement, ladite donnée sensible ou secrète est une donnée contenue dans la carte et ne devant pas être modifiée en accès libre par le monde extérieur.

Dans un autre mode de réalisation, ladite donnée sensible ou secrète est une donnée contenue dans la carte et ne devant pas être révélée au monde extérieur.

L'invention concerne également une architecture pour la mise en oeuvre du procédé, comprenant une unité centrale de traitement et un capteur matériel distinct de ladite unité centrale de traitement, ledit capteur matériel étant sensible auxdites perturbations et fournissant, en l'absence de perturbation, un résultat prédictible.

Dans un mode de réalisation, l'architecture comprend, en outre, au moins une temporisation associée à ladite unité centrale de traitement.

L'invention concerne également une carte à puce pour la mise en oeuvre du procédé, comprenant des moyens de mémoire stockant le code informatique, des moyens de traitement pour l'exécution dudit code informatique, l'exécution des processus sensible et redondant et l'exécution d'un moyen de type piège entre l'exécution des deux processus.

On comprendra mieux l'invention à l'aide de la description, faite ci-après à titre purement explicatif, d'un mode de réalisation de l'invention, en référence aux figures annexées :
- la figure 1 illustre les solutions de l'art antérieur les plus proches ;
- la figure 2 illustre la solution mise en oeuvre par la présente invention ; et
- la figure 3 illustre un exemple d'utilisation de la présente invention.

En référence à la figure 2, la perturbation longue 13 affecte une commande Cmd et notamment le processus sensible 10 et/ou le processus redondant 11 qui peuvent être mis en oeuvre selon une solution de l'art antérieur. On insère un capteur 21 de type piège entre l'exécution du processus sensible et l'exécution du processus redondant

Si la perturbation 13 ne chevauche qu'une partie du processus sensible (ou du processus redondant) et pas le piège (B), le piège ne détectera pas la perturbation et donc l'éventualité d'une faute, mais les processus sensible 10 et redondant 11 diffèreront et permettront la détection de la faute.

Si le perturbation 13 chevauche également partiellement le piège 21 (C), selon son implémentation, ce dernier pourra détecter la présence de la perturbation longue 13.

Enfin si la perturbation 13 englobe les deux processus sensible 10 et redondant 11 ainsi que le piège (A), les processus 10 et 11 peuvent ne pas détecter l'attaque auquel cas le piège 21 détectera cette perturbation 13.

On entend par « piège » un moyen fournissant un résultat prédictible ou prédéterminé indépendamment des autres paramètres utilisés par le composant électronique global et sensible à des paramètres extérieurs déformant le résultat produit. Le capteur piège 21 est sensible aux perturbations 13 et fournit en l'absence de perturbations un résultat prédictible, voire constant. Si le résultat est différent, une faute/perturbation a été détectée.

Ce capteur piège peut être mis en oeuvre de façon logicielle par un morceau de code. En langage assemblé, le capteur peut consister en la suite suivante de pseudo codes :
**Trap :**
   **load ptr, #nvm_addr_ref1**
   **load R1, @ptr**
   **store @ram1, R1**
   **load R2, @ram1**
   **load ptr, #nvm_addr_ref2**
   **load R3, @ptr**
   **add R2, R3**
   **cmp R2, #res**
   **beq no_fault**
   **jmp fault_detection**
**no_fault :**
   **ret**
***load ptr, #nvm_addr_ref1*** réalise le chargement dans le registre *ptr* de l'adresse de la référence *ref1* en mémoire non volatile *nvm* (*non volatile memory*),
***load R1,* @*ptr*** charge le registre *R1* avec le contenu pointé par le pointeur *ptr* (valeur *ref1*),
***store* @*ram1, R1*** écrit le contenu de *R1* à une adresse *ram1,*
***load R2,* @*ram1*** lit l'adresse *ram1* et transfère le contenu dans le registre *R2*,
***load ptr, #nvm_addr_ref2*** charge l'adresse de la *ref2* en *nvm* dans le registre *ptr,*
***load R3,* @*ptr*** charge le registre *R3* avec le contenu pointé par le pointeur *ptr* (valeur *ref2*),
***add R2,R3*** additionne *R2* avec *R3* dans *R2* (= *ref1* + *ref2*),
***cmp R2, #res*** compare *R2* avec *res* = *ref1* + *ref2,*
***beq no_fault*** sort du piège et reprend l'exécution du programme en cas de résultat attendu,
***jmp fault_detection*** : si *R2* est différent de la valeur attendue *#res*, alors le programme saute vers une routine de traitement de la faute.

Une faute ayant pour effet de modifier une donnée lors de l'exécution du code *Trap* (piège) a toutes les chances d'être détectée puisque le résultat final contenu dans R2 sera différent de la valeur attendue prédéfinie en dur dans le code (#*ref*).

Un capteur logiciel 21 de type piège consiste à manipuler des données et effectuer des opérations sur des variables connues. La perturbation appliquée par le pirate a pour effet de modifier au moins l'une des données ou variables utilisée dans le piège conduisant à un résultat inattendu.

Eventuellement, le capteur 21 peut être mis en oeuvre de façon matérielle, par exemple par l'utilisation d'un capteur photosensible pendant l'intervalle de temps entre le processus sensible 10 et le processus redondant 11. Si le courant électrique fourni par le capteur photosensible dépasse un seuil prédéfini, alors une perturbation lumineuse aura été détectée.

Egalement, un petit module matériel peut tourner en parallèle du CPU ou en série et réaliser des opérations avec un résultat prédéterminé dans le but de détecter une faute durant son exécution.

Plusieurs intégrations du piège 21 entre les processus 10 et 11 sont possibles :
- le piège est exécuté immédiatement après le processus sensible 10,
- le processus redondant 11 est réalisé immédiatement après le piège,
- le délai entre les processus 10 et 11 est déterminé de façon aléatoire et le piège est exécuté pendant ce délai,
- le piège est exécuté après un délai aléatoire suivant le processus sensible 10. Le moment d'exécution du piège est ainsi imprédictible.
- le piège est exécuté un nombre de fois aléatoire, pouvant constituer de la sorte l'intervalle entre les deux processus. La durée d'exécution du piège est ainsi rendue imprédictible.

A titre d'exemple, la figure 3 illustre l'utilisation de l'invention dans le cadre d'un accès en lecture d'un fichier de données. Une condition d'accès AC est émise (30) lorsque l'utilisateur demande l'ouverture du fichier.

Si les conditions d'accès ne sont pas remplies, un code d'erreur est émis (31) par la routine de vérification des conditions d'accès. Ce code d'erreur interdit toute lecture du fichier demandé.

Si les conditions d'accès sont remplies, un capteur logiciel piège (32) est exécuté pendant un laps de temps. Lorsque le capteur détecte une faute selon l'invention, il met en oeuvre une réaction (33) selon les politiques de sécurité instaurées, la réaction interdisant l'accès au fichier.

Si le capteur logiciel n'a rien détecté au bout du laps de temps imparti, la condition d'accès AC au fichier (34) est de nouveau réexaminée (35), laquelle détecte une faute et met en oeuvre une politique de sécurité (33) si les données d'accès ont été modifiées par le pirate ou autorise (36) la lecture du fichier et la transmission des données si les conditions sont de nouveau satisfaites.

## Revendications

1. Procédé de détection d'une faute par perturbations pendant l'exécution d'un code informatique dans un dispositif électronique, ledit code informatique comportant un processus dit sensible, le procédé comprenant une étape d'exécution d'un processus redondant dudit processus sensible et une étape d'insertion d'un délai entre le processus sensible et le processus redondant,
**caractérisé en ce que**:
le procédé comporte, en outre, une étape d'exécution d'un moyen de type piège pendant ledit délai, ledit moyen étant sensible auxdites perturbations et fournissant, en l'absence de perturbation, un résultat prédictible.

2. Procédé selon la revendication 1,
**caractérisé en ce que** ledit moyen de type piège est un capteur logiciel.

3. Procédé selon la revendication 1,
**caractérisé en ce que** ledit moyen de type piège est un capteur matériel.

4. Procédé selon la revendication 1,
**caractérisé en ce que** ledit délai inséré est déterminé de façon aléatoire.

5. Procédé selon la revendication 1,
**caractérisé en ce que** ledit moyen de type piège est exécuté après un temps d'attente aléatoire.

6. Procédé selon la revendication 1,
**caractérisé en ce que** ladite étape d'exécution du moyen de type piège consiste à exécuter un nombre aléatoire de fois ledit moyen de type piège.

7. Procédé selon la revendication 1,
**caractérisé en ce que** le résultat prédictible est une valeur de référence dans la mémoire du dispositif.

8. Procédé selon la revendication 1,
**caractérisé en ce que** ledit moyen de type piège consiste en des lectures et écritures d'au moins une valeur de référence dans les mémoires du dispositif.

9. Procédé selon la revendication 1,
**caractérisé en ce que** ledit moyen de type piège réalise des opérations sur au moins une valeur de référence.

10. Procédé selon la revendication 1,
**caractérisé en ce que** ledit processus sensible consiste en une manipulation (lecture écriture, calcul, branchement conditionnel) d'une donnée sensible ou secrète.

11. Procédé selon la revendication précédente,
**caractérisé en ce que** ladite donnée sensible ou secrète est une donnée contenue dans la carte et ne devant pas être modifiée en accès libre par le monde extérieur.

12. Procédé selon la revendication précédente,
**caractérisé en ce que** ladite donnée sensible ou secrète est une donnée contenue dans la carte et ne devant pas être révélée au monde extérieur.

13. Architecture pour la mise en oeuvre du procédé selon la revendication 3 et l'une quelconque des revendications 4 à 12, comprenant une unité centrale de traitement et un capteur matériel distinct de ladite unité centrale de traitement, ledit capteur matériel étant sensible auxdites perturbations et fournissant, en l'absence de perturbation, un résultat prédictible.

14. Architecture selon la revendication précédente, **caractérisée en ce qu'**elle comprend, en outre, au moins une temporisation associée à ladite unité centrale de traitement.

15. Carte à puce pour la mise en oeuvre du procédé selon l'une quelconque des revendications 1 à 12, comprenant des moyens de mémoire stockant le code informatique, des moyens de traitement pour l'exécution dudit code informatique, l'exécution des processus sensible et redondant et l'exécution d'un moyen de type piège entre l'exécution des deux processus.

## Claims

1. A method for detecting a fault resulting from perturbations during the execution of a computer code in an electronic device, said computer code comprising a so-called sensitive process, said method comprising the step of executing a redundant procedure of said sensitive process and a step of inserting a delay between the sensitive process and the redundant procedure, **characterized in that** the method further includes a step of executing a trapping means during said delay, said means being sensitive to said perturbations and supplying a predictable result in the absence of perturbations.

2. A method according to claim 1, **characterized in that** said trapping means is a software detector.

3. A method according to claim 1, **characterized in that** said trapping means is a hardware detector.

4. A method according to claim 1, **characterized in that** said input delay is determined randomly.

5. A method according to claim 1, **characterized in that** said trapping means is executed after a random waiting time.

6. A method according to claim 1, **characterized in that** said step of executing the trapping means consists in executing said trapping means a random number of times.

7. A method according to claim 1, **characterized in that** the predictable result is a reference value in the memory of the device.

8. A method according to claim 1, **characterized in that** said trapping means consists in reading and writing at least one reference value from/into the memory of the device.

9. A method according to claim 1, **characterized in that** said trapping means performs operations on at least one reference value.

10. A method according to claim 1, **characterized in that** said sensitive process consists in handling data (reading, writing, calculation, conditional jump) of sensitive or secret data.

11. A method according to the preceding claim, **characterized in that** said sensitive or secret data is data contained in the card which must not be modified through a free access from the outside world.

12. A method according to the preceding claim, **characterized in that** said sensitive or secret data is data contained in the card which must not be revealed to the outside world.

13. An architecture for implementing the method according to claim 3 and to any one of claims 4 to 12, comprising a central processing unit and a hardware detector different from said central processing unit, said hardware detector being sensitive to said perturbations and supplying a predictable result, in the absence of perturbations.

14. An architecture according to the preceding claim, **characterized in that** it further comprises at least a timeout associated with said central processing unit.

15. A chip card for the implementation of the method according to any one of claims 1 to 12, comprising memory means storing the computer code, processing means for the execution of said computer code, the execution of a sensitive process and a redundant procedure and the execution of the trapping means between the execution of the process and the procedure.

## Patentansprüche

1. Erkennungsverfahren eines während der Ausführung eines Informatikcodes in einer elektronischen Vorrichtung aufgrund von Störungen aufgetretenen Fehlers, wobei der genannte Informatikcode einen so genannten sensiblen Prozess umfasst, wobei das Verfahren einen Ausführungsschritt eines redundanten Prozesses des genannten sensiblen Prozesses umfasst, sowie einen Einfügungsschritt einer Frist zwischen dem sensiblen Prozess und den redundanten Prozess, **dadurch gekennzeichnet, dass** das Verfahren ferner einen Ausführungsschritt eines Mittels vom Typ Falle während der genannten Frist umfasst, wobei das genannte Mittel sensibel ist gegenüber den genannten Störungen und bei Abwesenheit einer Störung ein voraussagbares Ergebnis liefert.

2. Verfahren gemäß Anspruch 1, **dadurch gekennzeichnet, dass** das genannte Mittel vom Typ Falle ein Software-Sensor ist.

3. Verfahren gemäß Anspruch 1, **dadurch gekennzeichnet, dass** das genannte Mittel vom Typ Falle ein Hardware-Sensor ist.

4. Verfahren gemäß Anspruch 1, **dadurch gekennzeichnet, dass** die genannte eingefügte Frist zufällig bestimmt wird.

5. Verfahren gemäß Anspruch 1, **dadurch gekennzeichnet, dass** das genannte Mittel vom Typ Falle nach einer zufälligen Wartezeit ausgeführt wird.

6. Verfahren gemäß Anspruch 1, **dadurch gekennzeichnet, dass** der genannte Ausführungsschritt des Mittels vom Typ Falle darin besteht, eine Zufallszahl mal das genannte Mittel vom Typ Falle auszuführen.

7. Verfahren gemäß Anspruch 1, **dadurch gekennzeichnet, dass** das voraussagbare Ergebnis ein Bezugswert im Speicher der Vorrichtung ist.

8. Verfahren gemäß Anspruch 1, **dadurch gekennzeichnet, dass** das genannte Mittel vom Typ Falle aus Auslesungen und Eintragungen mindestens eines Bezugswerts im Speicher der Vorrichtung besteht.

9. Verfahren gemäß Anspruch 1, **dadurch gekennzeichnet, dass** das genannte Mittel vom Typ Falle an mindestens einem Bezugswert Operationen durchführt.

10. Verfahren gemäß Anspruch 1, **dadurch gekennzeichnet, dass** der genannte sensible Prozess aus einer Manipulation (Auslesen Eintragen, Rechnen, bedingter Anschluss) einer sensiblen oder geheimen Information besteht.

11. Verfahren gemäß dem vorangehenden Anspruch, **dadurch gekennzeichnet, dass** die genannte sensible oder geheime Information eine in der Karte enthaltene Information ist und nicht durch freien Zugriff von außen geändert werden darf.

12. Verfahren gemäß dem vorangehenden Anspruch, **dadurch gekennzeichnet, dass** die genannte sensible oder geheime Information eine in der Karte enthaltene Information ist und nicht der Außenwelt bekanntgegeben werden darf.

13. Architektur für die Umsetzung des Verfahrens gemäß Anspruch 3 und einem der Ansprüche 4 bis 12, bestehend aus einer zentralen Verarbeitungseinheit und einem von der genannten zentralen Verarbeitungseinheit getrennten Hardware-Sensor, wobei der Hardware-Sensor sensibel ist gegenüber den genannten Störungen und bei Abwesenheit einer Störung ein voraussagbares Ergebnis liefert.

14. Architektur gemäß dem vorangehenden Anspruch, **dadurch gekennzeichnet, dass** sie ferner mindestens eine der genannten zentralen Verarbeitungsarbeit zugeordnete Verzögerung umfasst.

15. Chipkarte für die Umsetzung des Verfahrens gemäß einem der Ansprüche 1 bis 12, bestehend aus den Informatikcode speichernden Mitteln, Verarbeitungsmitteln für die Ausführung des genannten Informatikcodes, die Ausführung der sensiblen und redundanten Prozesse und die Ausführung eines Mittels vom Typ Falle zwischen der Ausführung der beiden Prozesse.
